(19) Europäisches Patentamt
European Patent Office
Office européen des brevets

(11) **EP 4 390 823 A1**

(12) **EUROPEAN PATENT APPLICATION**

(43) Date of publication:
**26.06.2024 Bulletin 2024/26**

(21) Application number: **23198223.2**

(22) Date of filing: **19.09.2023**

(51) International Patent Classification (IPC):
***G06Q 30/0235*** (2023.01)     ***G06Q 30/0251*** (2023.01)
***H04W 4/021*** (2018.01)

(52) Cooperative Patent Classification (CPC):
**G06Q 30/0252; G06Q 30/0235; H04W 4/021**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.12.2022 JP 2022206092**

(71) Applicant: **FUJITSU LIMITED
Kawasaki-shi, Kanagawa 211-8588 (JP)**

(72) Inventors:
• **Nakajima, Kenji**
  **Kawasaki-shi, Kanagawa, 211-8588 (JP)**
• **Ohno, Takashi**
  **Kawasaki-shi, Kanagawa, 211-8588 (JP)**

(74) Representative: **Hoffmann Eitle
Patent- und Rechtsanwälte PartmbB
Arabellastraße 30
81925 München (DE)**

(54) **INCENTIVE DETERMINATION METHOD AND PROGRAM THEREOF**

(57)     An incentive determination method includes identifying, by a computer, a stay time span at each visit spot visited by a user among a plurality of spots included in a target area, calculating an evaluation value per time frame at each of the plurality of spots based on a congestion degree per time frame at the spot such that the evaluation value becomes higher as the congestion degree becomes lower, the evaluation value being used to determine an incentive for visiting the target area, calculating an incentive value for visiting each visit spot according to

FIG. 1

EP 4 390 823 A1

**Description**

FIELD

The embodiment discussed herein is related to an incentive determination method and a program thereof.

BACKGROUND

Heretofore, in a tourism area, local concentration of tourists at a tourism spot causes congestion around the tourism spot and hinders the lives of residents. Meanwhile, since some of the residents earn their livelihoods by working in tourist industry, it is undesirable to take a countermeasure to simply limit the number of tourists.

As a related art, there is a technique of, upon use of a self-terminal, identifying one of predicted congestion degrees concerning the self-terminal at a time and a location of the use from a prediction table, identifying an incentive for a customer according to the identified predicted congestion degree from an incentive definition table, and giving the incentive.

Japanese Laid-open Patent Publication No. 2018-22377 is disclosed as related art.

PROBLEMS

However, in a tourism area or the like having multiple spots, it is difficult to activate empty spots having few tourists (also referred to as vacant spots) while reducing crowded spots with the related art.

According to one aspect, an object of the present disclosure is to reduce crowded spots and activate empty spots.

[Effects of Invention]

An aspect of the present disclosure produces an effect of activating an empty spot while reducing crowded spots.

SUMMARY

According to an aspect of the embodiment, an incentive determination method includes identifying, by a computer, a stay time span at each visit spot visited by a user among a plurality of spots included in a target area, calculating an evaluation value per time frame at each of the plurality of spots based on a congestion degree per time frame at the spot such that the evaluation value becomes higher as the congestion degree becomes lower, the evaluation value being used to determine an incentive for visiting the target area, calculating an incentive value for visiting each visit spot according to an evaluation value for the identified stay time span at each visit spot based on the calculated evaluation value per time frame at each spot, and determining an incentive to be given to the user based on a sum of calculated incentive values.

BRIEF DESCRIPTION OF DRAWINGS

FIG. 1 is a diagram illustrating an example of an incentive determination method according to an embodiment;
FIG. 2 is a diagram illustrating a system configuration example of an information processing system;
FIG. 3 is a block diagram illustrating a hardware configuration example of an incentive determination apparatus;
FIG. 4 is a block diagram illustrating a hardware configuration example of a user terminal;
FIG. 5 is a diagram illustrating an example of information stored in a capacity information table;
FIG. 6 is a diagram illustrating an example of information stored in a congestion state DB;
FIG. 7 is a diagram illustrating an example of information stored in a spot stay time DB;
FIG. 8 is a block diagram illustrating a functional configuration example of the incentive determination apparatus;
FIG. 9 is a diagram illustrating an example of congestion degrees per time frame at a spot (part 1);
FIG. 10 is a diagram illustrating an example of congestion degrees per time frame at a spot (part 2);
FIG. 11 is a diagram illustrating an example of a notification of campaign information and congestion information;
FIG. 12 is a diagram illustrating an example of a notification of an incentive;
FIG. 13 is a flowchart illustrating an example of an information processing procedure of the user terminal;
FIG. 14 is a flowchart illustrating an example of a congestion state update processing procedure of the incentive determination apparatus; and
FIG. 15 is a flowchart illustrating an example of an incentive determination processing procedure of the incentive determination apparatus.

DESCRIPTION OF EMBODIMENT

Hereinafter, an embodiment of an incentive determination method and a program thereof according to the present disclosure will be described in detail with reference to the drawings.

(Embodiment)

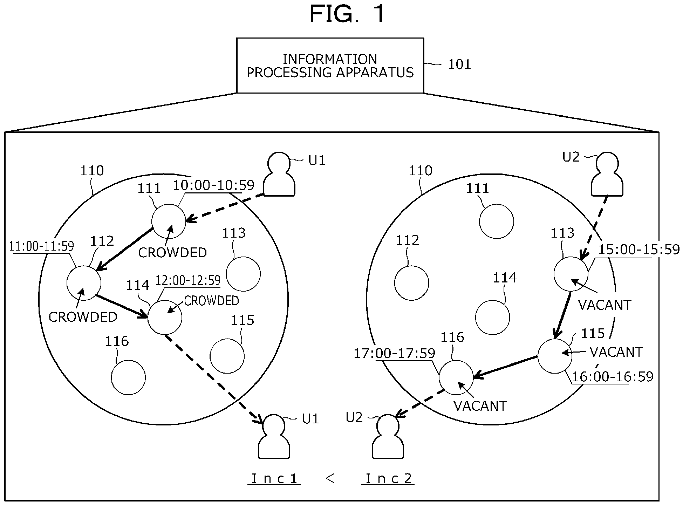

FIG. 1 is a diagram illustrating an example of an incentive determination method according to an embodiment. In FIG. 1, an information processing apparatus 101 is a computer that determines an incentive to be given to each user. The incentive is a reward to be given for visiting a target area. For example, the incentive may be points usable for payment in the target area or may be a ticket, a coupon, or the like usable in the target area. The incentive may be money, an article, or the like.

Examples of the target area include a tourism area, a commercial area, a theme park, and so on. The target area includes multiple spots. Examples of the spots include a facility, a place, an area, and the like. In the case where a target area is, for example, a "tourism area", spots are tourism spots such, for example, as sightseeing attractions and leisure facilities. In the case where a target area is a "commercial area", spots are facilities such, for example, as shops and food courts. In the case where a target area is a "theme park", spots are facilities such, for example, as attractions and shops.

In a tourism area having multiple tourism spots, there is a case where tourists concentrate at a specific spot depending on a season or a time of day to cause traffic jams in surrounding roads and to hinder the lives of neighboring residents. A conceivable countermeasure is to limit the number of tourists, but the limitation on the number of tourists directly leads to a decrease in sales and causes a life-and-death problem for local residents who earn their livelihoods mainly by working in the tourist industry.

From the viewpoint of a tourism area, it is desirable that tourists rapidly move from a crowded spot to a next spot and stay longer in a vacant spot without reducing the number of tourists. For this reason, it is desirable to take a countermeasure to reduce the number of visitors to a crowded spot and encourage tourists to visit vacant spots.

As a method of avoiding congestion of visitors in the related art, there is a method of increasing a turnover rate of visitors at a crowded spot. There is a method of promoting an entry or exit of a spot by giving an incentive. For example, there is a method of giving people in a crowded spot an incentive to exit from the crowded spot, and giving people outside a vacant spot an incentive to enter the vacant spot.

However, the methods in the related art aim at promoting an entry or exit of an individual spot, and have difficulty in reducing crowded spots and activating empty spots in an entire tourism area. For example, a tourist who exited from a certain crowded spot with an incentive may go to another crowded spot because there is no motivation to go to a vacant spot.

Likewise, even if a tourist visits a vacant spot by following promotion with an incentive, the tourist may go to another crowded spot afterward or may leave the vacant spot immediately due to the absence of a motivation not to go to a crowded spot or a motivation to stay longer at the vacant spot.

To address this, an incentive determination method of reducing crowded spots and activating empty spots in a target area including multiple spots will be described in the present embodiment. A processing example (corresponding to the following processing in (1) to (4)) of the information processing apparatus 101 will be described herein.

In the example illustrated in FIG. 1, a target area is a "target area 110", and multiple spots included in the target area are "spots 111 to 116". Users visiting the target area 110 are "users U1 and U2". Each of the users U1 and U2 is notified of information that the longer a stay at a vacant spot among the spots 111 to 116, the higher an incentive for visiting the target area 110.

(1) The information processing apparatus 101 identifies a stay time span at each visit spot visited by each user among the spots 111 to 116 included in the target area 110. The stay time span herein is a time span in which the user stays at the visit spot. For example, the stay time span is identified by detecting an entry to the visit spot and an exit from the visit spot based on position information of the user.

For example, the stay time span is expressed by a time point of an entry to the visit spot and a time point of an exit from the visit spot. The stay time span may be expressed as a time frame including a time point in which the user stays at the visit spot among multiple time frames into which the entire period of a day is divided. A time width of each time frame may be set to arbitrary width, and is, for example, one hour.

In the example illustrated in FIG. 1, the visit spots visited by the user U1 are "spots 111, 112, and 114", and the stay time spans at the respective spots 111, 112, and 114 are "10:00-10:59, 11:00-11:59, and 12:00-12:59". The visit spots visited by the user U2 are "spots 113, 115, and 116", and the stay time spans at the respective spots 113, 115, and 116 are "15:00-15:59, 16:00-16:59, and 17:00-17:59".

(2) Based on congestion degrees per time frame at each of the spots 111 to 116, the information processing apparatus 101 calculates each of evaluation values per time frame at each of the spots 111 to 116 such that the lower the congestion degree, the higher the evaluation value. The evaluation values are for use to determine an incentive for visiting the target area 110.

The congestion degree herein is a degree of congestion. The congestion degree for each time frame at each of the spots 111 to 116 is expressed by, for example, a proportion (ratio) of a staying person count for the time frame at the spot 111 to 116 to a capacity of the spot 111 to 116. For example, the evaluation value is a positive or negative value that becomes lower as the congestion degree becomes higher and that becomes higher as the congestion degree becomes lower.

For example, it is assumed that the spot 111 for 10:00-10:59 is crowded since the staying person count is large for the capacity. It is assumed that the spot 112 for 11:00-11:59 is crowded since the staying person count is large for the capacity. It is assumed that the spot 114 for 12:00-12:59 is crowded since the staying person count is large for the capacity.

It is assumed that the spot 113 for 15:00-15:59 is vacant since the staying person count is small for the capacity. It is assumed that the spot 115 for 16:00-16:59 is vacant since the staying person count is small for the capacity. It is assumed that the spot 116 for 17:00-17:59 is vacant since the staying person count is small for the capacity.

In this case, the evaluation values for the respective time frames "10:00-10:59, 11:00-11:59, and 12:00-12:59" at the respective spots 111, 112, and 114 are lower than the evaluation values for the respective time frames "15:00-15:59, 16:00-16:59, and 17:00-17:59" at the respective spots 113, 115, and 116.

The congestion degrees per time frame at each of the spots 111 to 116 are identified from, for example, congestion states on the day when the users U1 and U2 visit the target area 110. The congestion degrees per time frame at each of the spots 111 to 116 may be congestion degrees predicted from past congestion states.

(3) Based on the calculated evaluation values per time frame at the spots 111 to 116, the information processing apparatus 101 calculates an incentive value for visiting each visit spot according to the evaluation value(s) for the identified stay time span at the visit spot. The incentive value represents a contribution degree indicating how much visits to spots contribute to congestion relief or activation of empty spots in the target area 110.

For example, the information processing apparatus 101 refers to the evaluation values per time frame at the spots 111 to 116, and calculates the incentive value for visiting each visit spot by summing up the evaluation values for the time frames included in the stay time span at the visit spot.

For example, the stay time span at the spot 111 visited by the user U1 is "10:00-10:59". For this reason, the time frame included in the stay time span at the spot 111 is only "10:00-10:59". In this case, the incentive value for visiting the spot 111 is set to, for example, the evaluation value for 10:00-10:59 at the spot 111.

The stay time span at the spot 111 visited by the user U1 is assumed to be "10:00 to 10:30". In this case, for example, the incentive value for visiting the spot 111 may be a value obtained by multiplying the evaluation value for 10:00-10:59 at the spot 111 by a coefficient "0.5 (= 30 minutes/60 minutes)".

The stay time span at the spot 113 visited by the user U2 is "15:00-15:59". For this reason, the time frame included in the stay time span in the spot 113 is only "15:00-15:59". In this case, the incentive value for visiting the spot 113 is set to, for example, the evaluation value for 15:00-15:59 at the spot 113.

(4) The information processing apparatus 101 determines an incentive to be given to the user based on the sum of the calculated incentive values. For example, the information processing apparatus 101 may determine, as an incentive to be given to the user, points according to the sum of the incentive values.

In the example illustrated in FIG. 1, the sum of the incentive values is higher for the user 2 who visits the vacant spots only than for the user U1 who visits the crowded spots only. For this reason, an incentive Inc2 to be given to the user U2 is higher than an incentive Inc1 to be given to the user U1.

As described above, the information processing apparatus 101 is able to determine the incentive to be given to the user for visiting the target area 110 including the spots 111 to 116 by evaluating how much the visits to spots contribute to the congestion relief and the activation of empty spots in the entire target area 110. Accordingly, the information processing apparatus 101 is able to motivate the user to exit from a crowded spot or go to a vacant spot, and thereby activate empty spots while reducing crowded spots in the target area 110.

In the example illustrated in FIG. 1, the case where the user U1 visit only the crowded spots is described in order to clarify the difference between the incentives Inc1 and Inc2 to be given to the users U1 and U2. Even if there are some persons who visit crowded spots even knowing that a high incentive may not be obtained like the user U1, users who move to vacant spots while avoiding the crowded spots are increased and users who stay for a long period of time in the crowded spots are decreased in order to obtain higher incentives. As a result, congestion relief and attraction of visitors to empty spots may be expected as a whole.

(System Configuration Example of Information Processing System 200)

Next, description will be given of a system configuration example of an information processing system 00 including the information processing apparatus 101 illustrated in FIG. 1. A case where the information processing apparatus 101 illustrated in FIG. 1 is applied to an incentive determination apparatus 201 in the information processing system 200 will be described as an example. The information processing system 200 is applied to, for example, a computer system for reducing congestion in a tourism area.

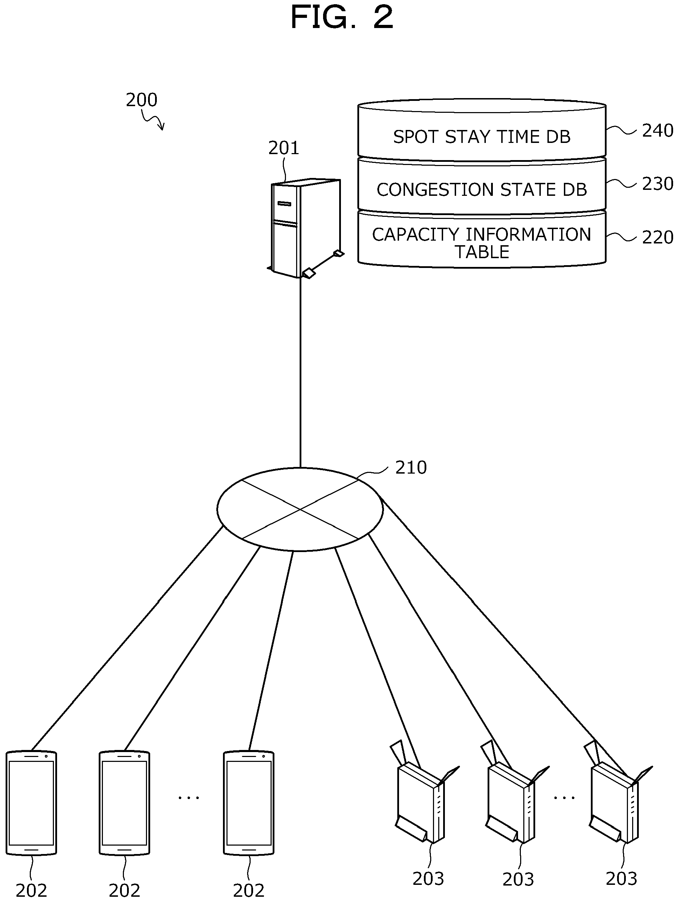

FIG. 2 is a diagram illustrating a system configuration example of the information processing system 200. In FIG. 2, the information processing system 200 includes the incentive determination apparatus 201, multiple user terminals 202, and multiple spot terminals 203. In the information processing system 200, the incentive determination apparatus 201, the user terminals 202, and the spot terminals 203 are coupled to each other via a wired or wireless network 210. For example, the network 210 is the Internet, a local area network (LAN), a wide area network (WAN), or the like.

The incentive determination apparatus 201 is a computer that has a capacity information table 220, a congestion state database (DB) 230, and a spot stay time DB 240, and determines incentives to be given to users. A user to be given an incentive is a person who visits a target area TA.

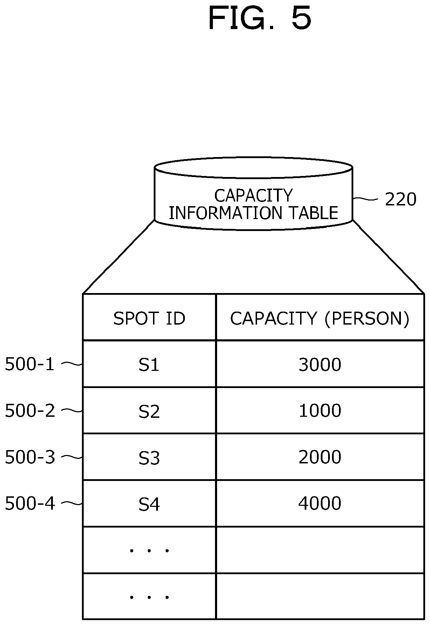

The target area TA is, for example, a tourism area. The target area TA includes multiple spots. The spots are, for example, tourism spots such as facilities, places, or areas. For example, the incentive determination apparatus 201 is a server. Information stored in the capacity information table 220, the congestion state DB 230, and the spot stay time DB 240 will be described later with reference to FIGs. 5 to 7.

In the following description, the multiple spots included in the target area TA will be referred to as "spots S1 to Sn" (n: a natural number of 2 or more) in some cases. An arbitrary spot among the spots S1 to Sn will be referred to as a "spot Si" (i = 1, 2, ..., n) in some cases.

Each of the user terminals 202 is a computer used by a user of the information processing system 200. For example, when the target area TA is a "tourism area", the user is a "tourist". For example, the user terminal 202 is a smartphone, a tablet personal computer (PC), or the like. The user terminal 202 may be a navigation device mounted in a vehicle used by the user.

The user terminal 202 may have a function of detecting a visit/exit of a spot Si. For example, the user terminal 202 detects an entry to and an exit from a preset geofence of each spot Si based on position information of the user terminal 202 itself. The geofence refers to a region surrounded by a virtual boundary line. When the user terminal 202 detects an entry to the geofence of a spot Si, the user terminal 202 detects a visit to the spot Si. When the user terminal 202 detects an exit from the geofence of the spot Si, the user terminal 202 detects an exit from the spot Si.

Instead, the user terminal 202 may detect a visit to a spot Si when receiving a beacon from a beacon transmitter installed in the spot Si. The user terminal 202 may detect the exit from the spot Si when stopping receiving the beacon from the beacon transmitter installed in the spot Si.

Alternatively, the user terminal 202 may detect a visit to a spot Si when reading code information provided in the spot Si. The code information is, for example, quick response (QR) code. The QR Code is a registered trademark. In this case, for example, after detecting a visit to a spot Si, the user terminal 202 may detect an exit from the spot Si when the user terminal 202 detects a visit to a different spot Sj (j ≠ i, j = 1, 2, ..., n). The time point of the exit from the spot Si may be obtained by subtracting a time period of travel from the spot Si to the different spot Sj from the time point of the visit to the different spot Sj.

The spot terminal 203 is a computer installed in each spot Si and configured to measure a staying person count at the spot Si. The staying person count indicates the number of users staying at the spot Si at a measurement time point. For example, the spot terminal 203 may measure the staying person count at the spot Si by analyzing video data captured by a camera installed at the spot Si.

The spot terminal 203 may measure the staying person count at the spot Si by detecting an entry and an exit of each user with sensors provided at an entrance and an exit of the spot Si. The spot terminal 203 may measure the staying person count at the spot Si by using a beacon receiver installed in the spot Si and a beacon transmitter (for example, the user terminal 202) owned by each user.

Instead, for example, the incentive determination apparatus 201 may measure the staying person count at the spot Si by using the position information of the spot Si and the position information of the user terminals 202. For example, the incentive determination apparatus 201 sets a geofence for each spot Si based on the position information of the spot Si. The incentive determination apparatus 201 receives the position information of each user terminal 202. Based on the received position information of the user terminals 202, the incentive determination apparatus 201 may measure the staying person count at each spot Si by detecting an entry to and an exit from the geofence of the spot Si.

(Hardware Configuration Example of Incentive Determination Apparatus 201)

Next, a hardware configuration example of the incentive determination apparatus 201 will be described.

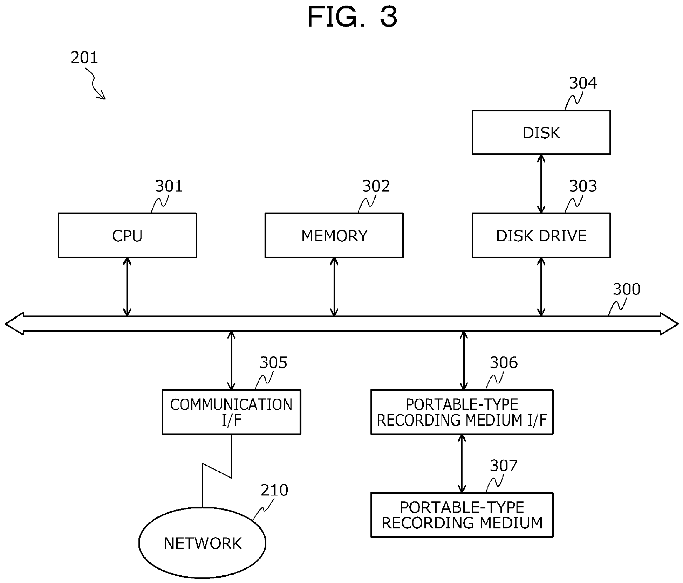

FIG. 3 is a block diagram illustrating a hardware configuration example of the incentive determination apparatus 201. In FIG. 3, the incentive determination apparatus 201 includes a central processing unit (CPU) 301, a memory 302, a disk drive 303, a disk 304, a communication interface (I/F) 305, a portable-type recording medium I/F 306, and a portable-type recording medium 307. These components are coupled to each other by a bus 300.

The CPU 301 controls the entire incentive determination apparatus 201. The CPU 301 may include multiple cores. For example, the memory 302 includes a read-only memory (ROM), a random-access memory (RAM), a flash ROM, and the like. For example, the flash ROM stores a program of an operating system (OS), the ROM stores an application program, and the RAM is used as a work area of the CPU 301. The programs stored in the memory 302 are loaded by the CPU 301 and cause the CPU 301 to execute coded processing.

The disk drive 303 controls reading and writing of data from and to the disk 304 in accordance with the control of the CPU 301. The disk 304 stores data written under the control of the disk drive 303. The disk 304 is, for example, a magnetic disk, an optical disk, or the like.

The communication I/F 305 is coupled to the network 210 through a communication line and coupled to external computers (for example, the user terminals 202 and the spot terminals 203 illustrated in FIG. 2) via the network 210. The communication I/F 305 functions as an interface between the network 210 and the inside of the apparatus, and controls input and output of data from and to the external computers. The communication I/F 305 is, for example, a modem, a LAN adapter, or the like.

The portable-type recording medium I/F 306 controls reading and writing of data from and to the portable-type recording medium 307 in accordance with the control of the CPU 301. The portable-type recording medium 307 stores data written under the control of the portable-type recording medium I/F 306. The portable-type recording medium 307 is, for example, a compact disc (CD)-ROM, a Digital Versatile Disk (DVD), a Universal Serial Bus (USB) memory, or the like.

The incentive determination apparatus 201 may include, for example, an input device, a display, and the like in addition to the aforementioned components. For example, the incentive determination apparatus 201 does not have to include the portable-type recording medium I/F 306, and the portable-type recording medium 307 among the aforementioned components. The spot terminals 203 illustrated in FIG. 2 may be each implemented in the same hardware configuration as in the incentive determination apparatus 201. However, the spot terminal 203 may include a camera, a beacon receiver, and the like.

(Hardware Configuration Example of User Terminal 202)

Next, a hardware configuration example of the user terminal 202 will be described.

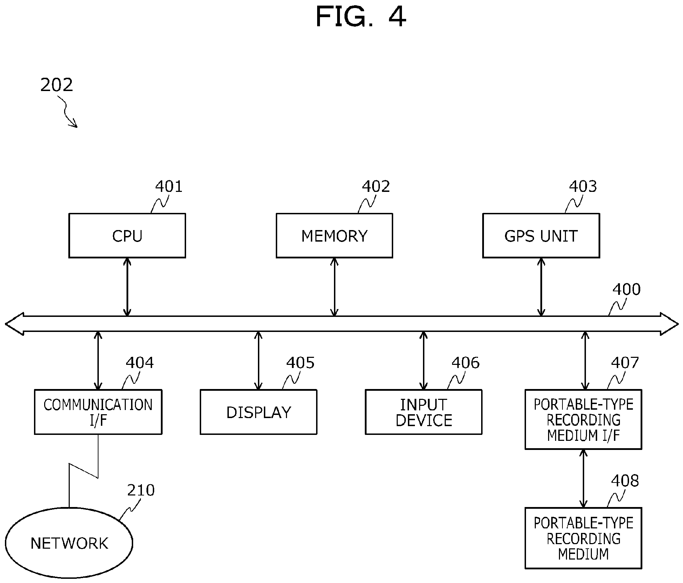

FIG. 4 is a block diagram illustrating a hardware configuration example of the user terminal 202. In FIG. 4, the user terminal 202 includes a CPU 401, a memory 402, a Global Positioning System (GPS) unit 403, a communication interface (I/F) 404, a display 405, an input device 406, a portable-type recording medium I/F 407, and a portable-type recording medium 408. These components are coupled to each other through a bus 400.

The CPU 401 controls the entire user terminal 202. The CPU 401 may include multiple cores. The memory 402 is a storage unit having, for example, a ROM, a RAM, a flash ROM, and the like. For example, the flash ROM and the ROM store various programs, and the RAM is used as a work area for the CPU 401. The programs stored in the memory 402 are loaded by the CPU 401 and cause the CPU 401 to execute coded processing.

The GPS unit 403 receives radio waves from GPS satellites and outputs position information of the user terminal 202. For example, the position information of the user terminal 202 is information identifying one point on the Earth such as a latitude and a longitude. The information processing apparatus 101 may correct the position information output from the GPS unit 403 by differential GPS (DGPS). As the satellites, for example, satellites of a quasi-zenith satellite system may be used.

The communication I/F 404 is coupled to the network 210 through a communication line and is coupled to external computers (for example, the incentive determination apparatus 201 and the spot terminals 203) through the network 210. The communication I/F 404 functions as an interface between the network 210 and the inside of the user terminal 202 and controls input and output of data from and to the external apparatuses.

The display 405 is a display device that displays a cursor, icons, and a toolbox, and also displays data on documents, images, functional information, and the like. For the display 405, for example, a liquid crystal display, an organic electroluminescence (EL) display, or the like may be used.

The input device 406 has keys for inputting characters, numbers, various instructions, and the like and is used for inputting data. The input device 406 may be keyboard, a mouse, or the like or may be a touch panel-type input pad, a numeric keypad, or the like.

The portable-type recording medium I/F 407 controls reading and writing of data from and to the portable-type recording medium 408 in accordance with the control of the CPU 401. The portable-type recording medium 408 stores data written under the control of the portable-type recording medium I/F 407.

The user terminal 202 may include, for example, a camera, a hard disk drive (HDD), a solid-state drive (SSD), and the like in addition to the above-described components. The user terminal 202 may have a function of reading code information such as a QR code.

(Information Stored in Various Tables 220, 230, and 240)

Next, information stored in the various tables 220, 230, and 240 included in the incentive determination apparatus 201 will be described with reference to FIGs. 5 to 7. The various tables 220, 230, and 240 are implemented by, for example, a storage device such as the memory 302 or the disk 304.

FIG. 5 is a diagram illustrating an example of the information stored in the capacity information table 220. In FIG. 5, the capacity information table 220 has fields of a spot ID and a capacity, and stores capacity information (for example, capacity information 500-1 to 500-4) as records by setting information in these fields.

The spot ID herein is an identifier for uniquely identifying a spot Si. The capacity is a capacity in the spot Si (unit: person). For example, the capacity information 500-1 indicates a capacity of "3000 persons" in the spot S1.

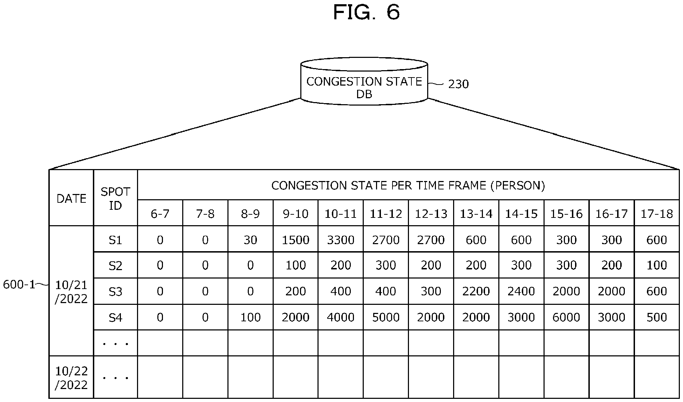

FIG. 6 is a diagram illustrating an example of the information stored in the congestion state DB 230. In FIG. 6, the congestion state DB 230 has fields of a date, a spot ID, and a congestion state per time frame, and stores congestion state information (for example, congestion state information 600-1) as a record by setting information in these fields.

The date herein indicates month, day, and year. The spot ID indicates an identifier for uniquely identifying a spot Si. The congestion state per time frame indicates a congestion state for each time frame at the spot Si. The time frames are divided by hour. The congestion state is expressed by the staying person count at the spot Si (unit: person).

For example, the congestion state information 600-1 indicates the congestion states per time frame at each of the spots S1 to Sn on October 21, 2022. In an example of the spot S1, the congestion state for 6:00-6:59 ("6-7" in FIG. 6) is "0 persons" and the congestion state for 11:00-11:59 ("11-12" in FIG. 6) is "2700 persons".

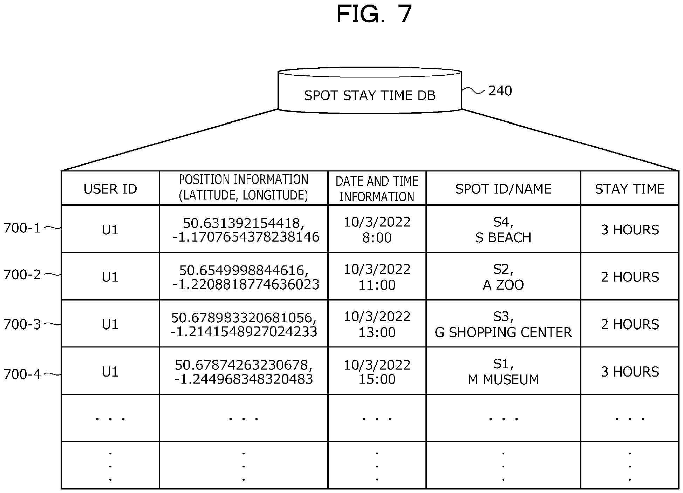

FIG. 7 is a diagram illustrating an example of the information stored in the spot stay time DB 240. In FIG. 7, the spot stay time DB 240 has fields of a user ID, position information, date and time information, spot ID/name, and a stay time, and stores spot stay time information (for example, spot stay time information 700-1 to 700-4) as records by setting information in these fields.

The user ID herein indicates an identifier for uniquely identifying a user. The position information indicates the position (latitude and longitude) of the user. The date and time information indicates the date and time when the user visited the spot Si. The spot ID/name indicates the spot ID and the spot name of the spot Si visited by the user. The stay time indicates a period of time during which the user stayed at the spot Si.

For example, according to the spot stay time information 700-1, it is possible to identify that the user U1 stayed at the spot S4 (S beach) for 3 hours from 8:00 on October 3, 2022.

(Functional Configuration Example of Incentive Determination Apparatus 201)

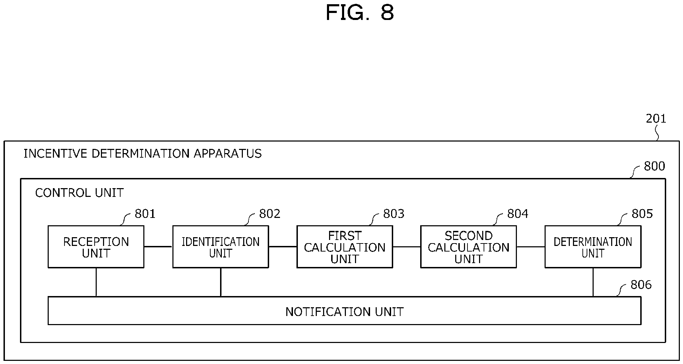

FIG. 8 is a block diagram illustrating a functional configuration example of the incentive determination apparatus 201. In FIG. 8, the incentive determination apparatus 201 includes a reception unit 801, an identification unit 802, a first calculation unit 803, a second calculation unit 804, a determination unit 805, and a notification unit 806. The reception unit 801 to the notification unit 806 are functions constituting a control unit 800. For example, the functions are implemented by using the communication I/F 305 or by causing the CPU 301 to execute a program stored in a storage device such as the memory 302, the disk 304, or the portable-type recording medium 307 illustrated in FIG. 3. For example, processing results obtained by the respective functional units are stored in a storage device such as the memory 302 or the disk 304.

The reception unit 801 receives a target area visit notification. The target area visit notification herein is for notifying that a user visits a target area TA. For example, the target area visit notification includes a user ID, date and time information, and position information. The date and time information indicates the date and time when the user identified by the user ID visits the target area TA.

The position information indicates the position of the user identified by the user ID. For example, the position information is information identifying one point on the Earth such as a latitude and a longitude output by the GPS unit 403 (see FIG. 4) of the user terminal 202. For example, the reception unit 801 receives the target area visit notification through reception thereof from the user terminal 202.

For example, the user terminal 202 detects a visit/exit of the target area TA. For example, the user terminal 202 detects a visit to or an exit from the target area TA by detecting an entry to or an exit from the target area TA based on the position information of the user terminal 202 itself.

The reception unit 801 receives a spot visit notification. The spot visit notification herein is for notifying that the user visits a spot Si in the target area TA. For example, the spot visit notification includes a user ID, date and time information, position information, and a spot ID/name.

The date and time information indicates the date and time when the user identified by the user ID visits the spot Si. The position information indicates the position of the user identified by the user ID. The spot ID/name indicates the spot ID and the spot name of the spot Si. For example, the reception unit 801 receives the spot visit notification through reception from the user terminal 202.

The reception unit 801 receives a spot exit notification. The spot exit notification herein is for notifying that the user exits from the spot Si. For example, the spot exit notification includes a user ID, date and time information, position information, and a spot ID/name. The date and time information indicates the date and time when the user identified by the user ID exits from the spot Si. For example, the reception unit 801 receives the spot exit notification through reception from the user terminal 202.

The reception unit 801 receives a target area exit notification. The target area exit notification herein is for notifying that the user exits from the target area TA. For example, the target area exit notification includes a user ID, date and time information, and position information. The date and time information indicates the date and time when the user identified by the user ID exits from the target area TA. For example, the reception unit 801 receives the target area exit notification through reception thereof from the user terminal 202.

The identification unit 802 identifies a stay time span at each of visit spots visited by the user among the spots S1 to Sn in the target area TA. For example, the identification unit 802 identifies the stay time span at a visit spot based on the received spot visit notification and spot exit notification.

In more detail, for example, in response to reception of a spot visit notification, the identification unit 802 newly registers spot stay time information in the spot stay time DB 240 (see FIG. 7) by storing the user ID, the position information, the date and time information, and the spot ID/name included in the spot visit notification in association with each other. At this time point, the stay time in the spot stay time information is "- (null)".

After that, in response to reception of a spot exit notification, the identification unit 802 identifies the spot stay time information associated with the user ID and the spot ID/name included in the spot exit notification from the spot stay time DB 240. The identification unit 802 calculates the stay time at the visit spot by obtaining a difference between the date and time information of the identified spot stay time information and the date and time information included in the spot exit notification.

Next, the identification unit 802 sets the calculated stay time in the field of the stay time in the identified spot stay time information. The identification unit 802 identifies the stay time span at the visit spot based on the date and time information of the identified spot stay time information and the calculated stay time (or the date and time information included in the spot exit notification).

In an example of the spot stay time information 700-1 illustrated in FIG. 7, the identification unit 802 identifies a stay time span "8:00 to 10:59" at the visit spot S4 from the date and time information "2022/10/3 8:00" and the stay time "3 hours".

The identification unit 802 identifies the congestion degrees per time frame at each spot Si included in the target area TA. The congestion degree herein is a degree of congestion. A higher congestion degree indicates that the spot Si is more crowded. A lower congestion degree indicates that the spot Si is more vacant. For example, the congestion degree is expressed by the proportion of the staying person count for each time frame at each spot Si to the capacity of the spot Si.

For example, the identification unit 802 obtains staying person count information from the spot terminal 203 installed in each spot Si. The staying person count information indicates the number of persons staying at the spot Si counted by the spot terminal 203. For example, the staying person count information includes a staying person count, a spot ID, a count date and time, and so on.

The timing for obtaining the staying person count information may be set to arbitrary timing. For example, the staying person count information may be obtained at regular time intervals or may be obtained in response to reception of each of the various notifications (such, for example, as a target area visit notification or a spot visit/exit notification).

The identification unit 802 identifies the staying person counts per time frame at each spot Si based on the obtained staying person count information. For example, when the identification unit 802 obtains the staying person count information including the staying person count "1500", the spot ID "S1", and the count date and time "9:30", the identification unit 802 identifies "1500" as the staying person count for 9:00-9:59 at the spot S1.

There is a case where multiple pieces of staying person count information is obtained for the same time frame at a spot Si. In this case, for example, the identification unit 802 may identify the largest staying person count among the staying person counts indicated by the respective pieces of the staying person count information as the staying person count for the time frame at the spot Si. Instead, the identification unit 802 may identify an average value of the staying person counts indicated by the respective pieces of the staying person count information as the staying person count for the time frame at the spot Si.

For example, the calculated staying person counts per time frame at each spot Si are stored in the congestion state DB 230 illustrated in FIG. 6. By referring to the congestion state DB 230, the identification unit 802 identifies the congestion degrees per time frame at each spot Si.

In more detail, for example, the identification unit 802 identifies the capacity in each spot Si by referring to the capacity information table 220 illustrated in FIG. 5. The identification unit 802 identifies the staying person counts per time frame at each spot Si by referring to the congestion state DB 230. The identification unit 802 identifies the congestion degree for each time frame at each spot Si by calculating the proportion of the staying person count for the time frame at the spot Si to the capacity of the spot Si.

The notification unit 806 may notify a user visiting a target area TA of campaign information. The campaign information herein is information for notifying a visitor that an incentive giving campaign is being executed in the target area TA.

For example, the campaign information is information that the longer a stay at a vacant spot among the spots S1 to Sn included in the target area TA, the higher the incentive for visiting the target area TA. For example, the campaign information may be information that the longer a stay at a crowded spot among the spots S1 to Sn included in the target area TA, the lower the incentive for visiting the target area TA.

For example, when a user visits the target area TA, the notification unit 806 may transmit the campaign information to the user terminal 202 for the user. For example, a visit to the target area TA is detected in response to reception of a target area visit notification from the user terminal 202.

The notification unit 806 makes a notification of congestion information enabling the congestion degree at each spot Si to be identified. The congestion information herein indicates the congestion degree at each spot Si in association with the spot name of the spot Si, for example. For example, the congestion degree is expressed by the proportion (unit: %) of the staying person count at the current time point (for the current time frame) at each spot Si to the capacity of the spot Si.

For example, a notification target of congestion information is each user staying in the target area TA. The timing for making a notification of the congestion information may be set to arbitrary timing. For example, a notification of the congestion information may be made at regular time intervals or may be made in response to reception of each of the various notifications (for example, such as a spot visit/exit notification).

For example, the notification unit 806 transmits the congestion information enabling the congestion degree at each spot Si to be identified to the user terminal 202 for each user staying in the target area TA. The user staying in the target area TA is, for example, a user from whom a target area visit notification has been received but a target area exit notification is yet to be received.

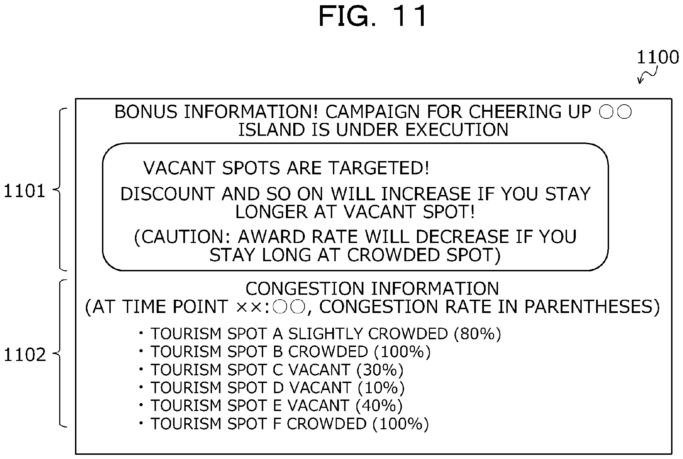

An example of a notification of the campaign information and the congestion information will be described later with reference to FIG. 11.

Based on the identified congestion degrees per time frame at each spot Si, the first calculation unit 803 calculates each of evaluation values per time frame at each spot Si such that the lower the congestion degree, the higher the evaluation value. The evaluation values herein are values for use to determine an incentive for visiting the target area TA. For example, the evaluation value may be a positive value or a negative value.

For example, if the identified congestion degree is higher than a threshold a, the first calculation unit 803 calculates, as the evaluation value, a negative value that becomes lower as the congestion degree becomes higher. If the congestion degree is equal to or lower than the threshold a, the first calculation unit 803 calculates, as the evaluation value, a positive value that becomes higher as the congestion degree becomes lower.

The threshold $\alpha$ may be set to arbitrary value. For example, it is assumed that the congestion degree for each time frame at each spot Si is expressed by the proportion of the staying person count for the time frame at the spot Si to the capacity of the spot Si (unit: %). In this case, for example, the threshold $\alpha$ is set to "$\alpha$ = 100%".

In this case, as an excess of the congestion degree for a certain time frame at a spot Si over 100% increases, the evaluation value for the time frame becomes a larger minus (negative) evaluation value. On the other hand, as a shortage of the congestion degree for a certain time frame at a spot Si with respect to 100% increases, the evaluation value for the time frame becomes a larger plus (positive) evaluation value.

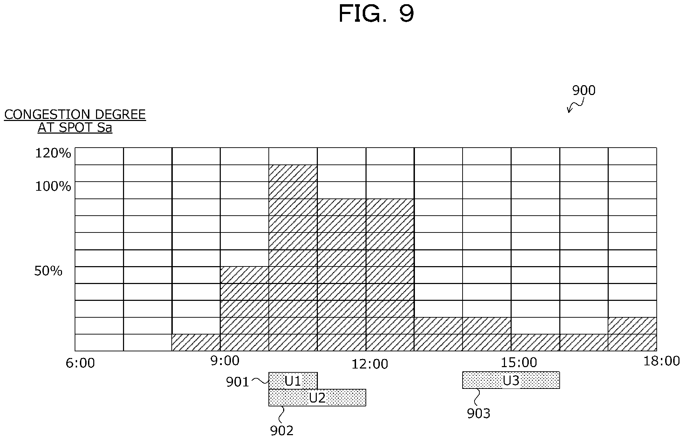

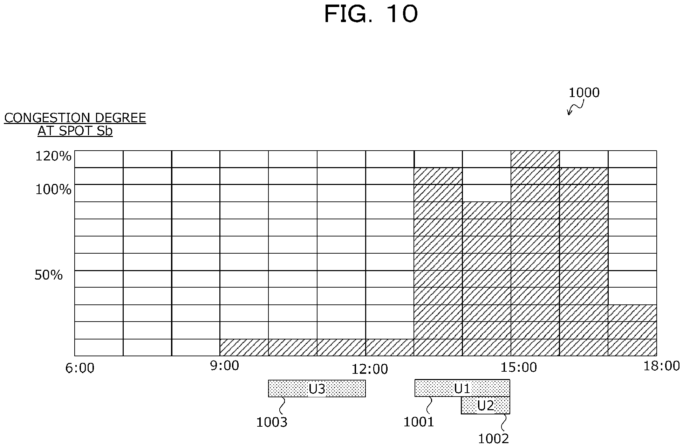

An example of calculation of each of the evaluation values per time frame at each spot Si will be described later with reference to FIGs. 9 and 10.

Based on the calculated evaluation values per time frame at each spot Si, the second calculation unit 804 calculates an incentive value for visiting each visit spot according to the evaluation value(s) for the identified stay time span at the visit spot. The incentive value herein indicates a contribution degree indicating how much visits to spots Si contribute to congestion relief or activation of empty spots in the target area TA.

For example, the second calculation unit 804 calculates the incentive value for visiting each visit spot by summing up the evaluation values for the time frames included in the identified stay time span at the visit spot based on the evaluation values per time frame at each spot Si.

For example, the stay time span at the visit spot S4 is assumed to be "8:00 to 10:59". In this case, the second calculation unit 804 identifies the time frames "8:00-8:59, 9:00-9:59, and 10:00-10:59" included in the stay time span "8:00 to 10:59". The second calculation unit 804 calculates the incentive value for visiting the visit spot S4 by summing up the evaluation values for each of the identified time frames "8:00-8:59, 9:00-9:59, and 10:00-10:59" among the evaluation values per time frame at the visit spot S4.

In another case, the stay time span at the visit spot S4 is assumed to be "8:00 to 10:29". In this case, the second calculation unit 804 identifies the time frames "8:00-8:59, 9:00-9:59, and 10:00-10:59" included in the stay time span "8:00 to 10:29". However, the user stays only for 30 minutes in the time frame "10:00-10:59". In this case, in order to calculate the incentive value for visiting the visit spot S4, the second calculation unit 804 may multiply the evaluation value for the time frame "10:00-10:59" by a value "0.5" obtained by dividing the actual stay time "30 minutes" by 60 minutes (the time length of each time frame). For example, the incentive value for visiting the visit spot S4 is calculated as "the evaluation value for the time frame "8:00-8:59" + the evaluation value for the time frame "9:00-9:59" + 0.5(the evaluation value of the time frame "10:00-10:59")".

An example of calculation of an incentive value for visiting each visit spot will be described later with reference to FIGs. 9 and 10. Hereinafter, an incentive value for visiting each visit spot will be referred to as "an incentive value for each visit spot" in some cases.

The determination unit 805 determines an incentive to be given to a user based on the sum of the calculated incentive values for the respective visit spots. For example, the determination unit 805 may determine, as an incentive to be given to the user, points depending on the sum of the incentive values. For example, the points are points usable in the target area TA.

The determination unit 805 may determine an incentive to be given to the user based on the sum of the calculated incentive values for the respective visit spots and the sum of the time lengths of the identified stay time spans at the respective visit spots. Here, the sum of the time lengths of the identified stay time spans at the respective visit spots is referred to as a "total stay time length".

In this case, for example, the determination unit 805 sets an incentive resource according to the total stay time length. The incentive resource may be equivalent to, for example, points usable in the target area TA. The determination unit 805 may determine that the incentive to be given to the user is an incentive according to the sum of the incentive values within the set resource.

The timing for determining an incentive may be set to arbitrary timing. For example, the incentive may be determined when the target area exit notification is received. In this case, for example, the incentive determination apparatus 201 may determine an incentive at a timing when the visit to the target area TA is finished.

The incentive may be determined at regular time intervals (for example, hourly) during the stay of the user in the target area TA. In this case, the incentive determination apparatus 201 may notify the user of the ongoing status of the incentive during the stay in the target area TA.

Examples of determination of an incentive to be given to a user will be described later with reference to FIGs. 9 and 10.

The notification unit 806 notifies the user of the determined incentive. The notification unit 806 may notify the user of the identified stay time spans and stay time lengths at the respective visit spots in association with the determined incentive. The notification unit 806 may notify the user of the identified congestion degrees for the stay time spans at the respective visit spots in association with the determined incentive.

For example, the notification unit 806 transmits an incentive award notification to the user terminal 202 for a user to be given the determined incentive. The incentive award notification includes information enabling the determined incentive to be identified. The incentive award notification may include information enabling the stay time spans at the respective visit spots, the congestion degrees for the stay time spans, and so on to be identified.

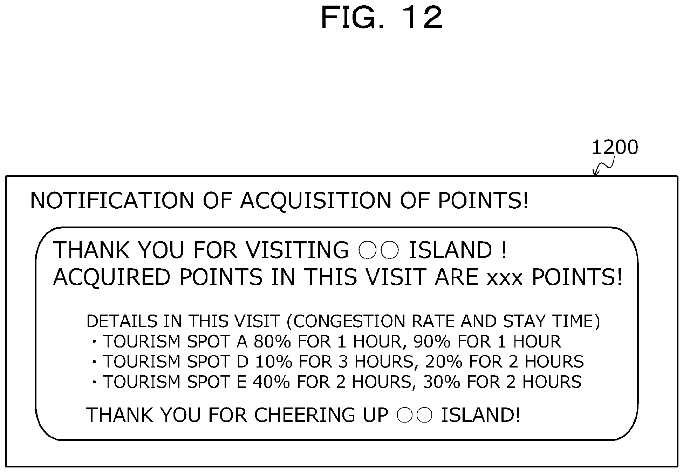

An example of a notification of the incentive will be described later with reference to FIG. 12. For example, processing of actually giving the determined incentive to the user may be executed by the incentive determination apparatus 201 or may be executed by another computer different from the incentive determination apparatus 201.

After a notification of the congestion information and before a user visits a first spot at which the congestion degree identified from the congestion information is lower than a first threshold, the congestion degree of the first spot is changed to be equal to or higher than the second threshold in some cases. Here, the first threshold is set to a value such that the spot Si may be determined as vacant when the congestion degree is lower than the first threshold. For example, the first threshold is set to a value of about 30%.

The second threshold is set to a value higher than the first threshold such that the spot Si may be determined as crowded when the congestion degree is equal to or higher than the second threshold. The second threshold is, for example, the threshold $\alpha$ described above. For example, there is a case where, while a user is moving to visit a vacant first spot with reference to the congestion information notified, the first spot becomes crowded.

In this case, in calculation of the incentive value for visiting the first spot, the second calculation unit 804 may adjust the incentive value to a value higher than an incentive value for visiting a spot where the congestion degree identified from the congestion information is equal to or higher than the second threshold. For example, the second calculation unit 804 may shorten the time length of the stay time span at the first spot to adjust the incentive value such that the incentive value will not be a large negative value. The second calculation unit 804 may set, as the evaluation value for the time frame included in the stay time span at the first spot, an evaluation value based on the congestion degree at the first spot identified from the congestion information (the congestion degree lower than the first threshold).

In a case where the congestion degree at a visit spot becomes lower than the first threshold while a user is staying at the visit spot, the notification unit 806 may notify the user of information that the incentive to be given to the user increases if the user continues to stay at the visit spot. For example, the visit spot where the user is staying is identified from the spot stay time information in which the stay time is not set among the records of the spot stay time information for the user in the spot stay time DB 240.

For example, in a case where the congestion degree at a visit spot becomes lower than the first threshold, the notification unit 806 may transmit a stay recommendation message to the user terminal 202 for a user staying at the visit spot. The stay recommendation message is a message indicating that the incentive will increase if the user continues to stay at the visit spot because the visit spot becomes vacant.

In a case where the congestion degree at a visit spot becomes equal to or higher than the second threshold while a user is staying at the visit spot, the notification unit 806 may notify the user of information that the incentive to be given to the user decreases if the user continues to stay at the visit spot. For example, in a case where the congestion degree at a visit spot becomes equal to or higher than the second threshold, the notification unit 806 may transmit an exit recommendation message to the user terminal 202 for a user staying at the visit spot. The exit recommendation message is a message indicating that the incentive will decrease if the user continues to stay at this visit spot because the visit spot becomes crowded.

The notification unit 806 may use, for example, an electronic mail service or a short message service as a notification means for various types of information (such as an incentive award notification). For example, as the congestion degrees per time frame at each spot Si, the incentive determination apparatus 201 may use congestion degrees (predicted congestion degrees) predicted from past congestion states for the same period of year (for example, for the same season).

While a user is staying at a visit spot where the congestion degree is lower than the first threshold, the incentive determination apparatus 201 may determine whether or not the congestion degree at the visit spot will become equal to or higher than the second threshold within a predetermined period of time. The predetermined period of time may be set to arbitrary period and is set to, for example, about 1 to 3 hours.

For example, the incentive determination apparatus 201 predicts a temporal change in the congestion degree at the visit spot within a predetermined period of time from the current time point based on a temporal change in the congestion degree at the visit spot in the latest period of time (for example, the latest several hours). The temporal change in the congestion degree is predicted by an existing method such as linear prediction, for example.

Based on the predicted temporal change in the congestion degree, the incentive determination apparatus 201 determines whether or not the congestion degree at the visit spot will become equal to or higher than the second threshold within the predetermined period of time. When determining that the congestion degree will become equal to or higher than the second threshold, the incentive determination apparatus 201 may notify the user staying at the visit spot of congestion prediction information.

For example, the congestion prediction information is information that the visit spot is predicted to be crowded from now. In a case where the user exits from the visit spot within a certain period of time (for example, within 30 minutes) after the notification of the congestion prediction information, the incentive determination apparatus 201 may give a bonus to the user when calculating the incentive value for vising the visit spot.

For example, the bonus of the incentive value is given by multiplying the calculated incentive value by a coefficient or adding a predetermined value to the calculated incentive value. When the calculated incentive value is a positive value, the coefficient is a value more than 1. On the other hand, when the calculated incentive value is a negative value, the coefficient is a value less than 1.

Accordingly, the incentive determination apparatus 201 is able to encourage a user to exit from a visit spot that is currently vacant but is predicted to be crowded in future, and give a bonus of the incentive value to a user who exits from the visit spot early before congestion occurs.

(Example of Determination of Incentive)

An example of determination of incentives to be given to users will be described with reference to FIGs. 9 and 10. Here, users visiting the target area TA are referred to as "users U1 to U3", and a case where the users U1 to U3 visit spots Sa and Sb included in the target area TA for different time frames will be described as an example. The spots Sa and Sb are any two of the spots S1 to Sn.

FIGs. 9 and 10 are diagrams illustrating an example of the congestion degrees per time frame at the spots. In FIG. 9, a graph 900 illustrates a temporal change in the congestion degrees per time frame at the spot Sa. The vertical axis indicates a congestion degree. The horizontal axis indicates a time. The congestion degree is expressed by the proportion (unit: %) of the staying person count for each time frame at the spot Sa to the capacity of the spot Sa.

In FIG. 10, a graph 1000 illustrates a temporal change in the congestion degrees per time frame at the spot Sb. The vertical axis indicates a congestion degree. The horizontal axis indicates a time. The congestion degree is expressed by the proportion (unit: %) of the staying person count for each time frame at the spot Sb to the capacity of the spot Sb.

In calculation of each of evaluation values per time frame at each of the spots Sa and Sb, the first calculation unit 803 calculates, as the evaluation value, a negative value that becomes lower as the congestion degree becomes higher if the congestion degree is higher than the threshold a. If the congestion degree is equal to or lower than the threshold a, the first calculation unit 803 calculates, as the evaluation value, a positive value that becomes higher as the congestion degree becomes lower.

The threshold $\alpha$ herein is set to "$\alpha$ = 100%". For example, the first calculation unit 803 may calculate the evaluation value per time frame at each of the spots Sa and Sb by using the following formula (1). In the following formula (1), Evaluation Value (t) denotes an evaluation value for a time frame t and Congestion Degree (t) denotes a congestion degree for the time frame t.

$$\text{Evaluation Value (t)} = \alpha - \text{Congestion Degree (t)} \dots (1)$$

According to the above formula (1), for example, the evaluation value for a time frame "6:00-6:59" at the spot Sa is "100 (= 100 - 0)". The evaluation value for a time frame "10:00-10:59" at the spot Sa is "-10 (= 100 - 110)". The evaluation value for a time frame "14:00-14:59" at the spot Sa is "80 (= 100 - 20)".

According to the above formula (1), for example, the evaluation value of the spot Sb for a time frame "6:00-6:59" is "100 (= 100 - 0)". The evaluation value for a time frame "10:00-10:59" at the spot Sb is "90 (= 100 - 10)". The evaluation value for a time frame "14:00-14:59" at the spot Sb is "10 (= 100 - 90)".

Here, the following case is considered: the user U1 stays at the spot Sa for 60 minutes from 10:00 and stays at the spot Sb for 120 minutes from 13:00; the user U2 stays at the spot Sa for 120 minutes from 10:00 and stays at the spot Sb for 60 minutes from 14:00; and the user U3 stays at the spot Sa for 120 minutes from 14:00 and stays at the spot Sb for 120 minutes from 10:00.

In FIG. 9, a sign 901 represents a stay time span "10:00 to 10:59" at the spot Sa of the user U1. In FIG. 10, a sign 1001 represents a stay time span "13:00 to 14:59" at the spot Sb of the user U1. In FIG. 9, a sign 902 represents a stay time span "10:00 to 11:59" at the spot Sa of the user U2. In FIG. 10, a sign 1002 represents a stay time span "14:00 to 14:59" at the spot Sb of the user U2. In FIG. 9, a sign 903 represents a stay time span "14:00 to 15:59" at the spot Sa of the user U3. In FIG. 10, a sign 1003 represents a stay time span "10:00 to 11:59" at the spot Sb of the user U3.

For each of the users U1 to U3, for example, the second calculation unit 804 calculates an incentive value for visiting each of the visit spots Sa and Sb by summing up the evaluation values for the time frames included in the stay time span at each of the spot Sa or Sb.

First, an example of calculation of an incentive value for visiting each of the spots Sa and Sb for the user U1 will be described. Regarding the spot Sa, the second calculation unit 804 identifies a time frame "10:00-10:59" included in the stay time span "10:00 to 10:59". As the incentive value for visiting the spot Sa, the second calculation unit 804 calculates the evaluation value "-10" for the identified time frame "10:00-10:59" among the evaluation values per time frame at the spot Sa.

Regarding the spot Sb, the second calculation unit 804 identifies time frames "13:00-13:59 and 14:00-14:59" included in the stay time span "13:00 to 14:59". The second calculation unit 804 calculates an incentive value for visiting the spot Sb by summing up the evaluation values "-10 and 10" for the identified time frames "13:00-13:59 and 14:00-14:59" among the evaluation values per time frame at the spot Sb. Here, the incentive value for the spot Sa is "-10". The incentive value for the spot Sb is "0".

Next, an example of calculation of an incentive value for visiting each of the spots Sa and Sb for the user U2 will be described. Regarding the spot Sa, the second calculation unit 804 identifies time frames "10:00-10:59 and 11:00-11:59" included in the stay time span "10:00 to 11:59". The second calculation unit 804 calculates an incentive value for visiting the spot Sa by summing up the evaluation values "-10 and 10" for the identified time frames "10:00-10:59 and 11:00-11:59" among the evaluation values per time frame at the spot Sa.

Regarding the spot Sb, the second calculation unit 804 identifies a time frame "14:00-14:59" included in the stay time span "14:00 to 14:59". As the incentive value for visiting the spot Sb, the second calculation unit 804 calculates the evaluation value "10" for the identified time frame "14:00-14:59" among the evaluation values per time frame at the spot Sb. Here, the incentive value for the spot Sa is "0". The incentive value for the spot Sb is "10".

Next, an example of calculation of an incentive value for visiting each of the spots Sa and Sb for the user U3 will be described. Regarding the spot Sa, the second calculation unit 804 identifies time frames "14:00-14:59 and 15:00-15:59" included in the stay time span "14:00 to 15:59". The second calculation unit 804 calculates an incentive value for visiting the spot Sa by summing up the evaluation values "80 and 90" for the identified time frames "14:00-14:59 and 15:00-15:59" among the evaluation values per time frame at the spot Sa.

Regarding the spot Sb, the second calculation unit 804 identifies time frames "10:00-10:59 and 11:00-11:59" included in the stay time span "10:00 to 11:59". The second calculation unit 804 calculates an incentive value for visiting the spot Sb by summing up the evaluation values "90 and 90" for the identified time frames "10:00-10:59 and 11:00-11:59" among the evaluation values per time frame at the spot Sb. Here, the incentive value for the spot Sa is "170". The incentive value for the spot Sb is "180".

The determination unit 805 determines an incentive for each of the users U1 to U3 based on, for example, the sum of the incentive values at the respective spots Sa and Sb and the total stay time length at the spots Sa and Sb. The total stay time length is the sum of the time lengths of the stay time spans at the respective spots Sa and Sb.

First, an example of determination of an incentive to be given to the user U1 will be described. For the user U1, the determination unit 805 calculates the total stay time length at the spots Sa and Sb. The total stay time length at the spots Sa and Sb is "180 minutes". In this case, the determination unit 805 sets an incentive resource "300" according to the total stay time length "180 minutes". The incentive resource is obtained in accordance with, for example, "the total stay time length (unit: hour) $\times$ 100".

For the user U1, the determination unit 805 calculates the sum of the incentive values at the respective spots Sa and Sb. The sum of the incentive values at the respective spots Sa and Sb is "-10 (= -10 + 0)".

The determination unit 805 determines that the incentive to be given to the user U1 is an incentive according to "-10" that is the sum of the incentive values within the set resource "300". However, when the sum of the incentive values is a negative value "-10", the determination unit 805 determines that the incentive to be given to the user U1 is, for example, "0 (no incentive)".

Next, an example of determination of an incentive to be given to the user U2 will be described. For the user U2, the determination unit 805 calculates the total stay time length at the spots Sa and Sb. The total stay time length at the spots Sa and Sb is "180 minutes". In this case, the determination unit 805 sets an incentive resource "300 (for 3 hours)" according to the total stay time length "180 minutes".

For the user U2, the determination unit 805 calculates the sum of the incentive values at the respective spots Sa and Sb. The sum of the incentive values at the respective spots Sa and Sb is "10 (= 0 + 10)". The determination unit 805 determines the incentive to be given to the user U2 is an incentive "10" according to "10" that is the sum of the incentive values within the set resource "300".

Next, an example of determination of an incentive to be given to the user U3 will be described. For the user U3, the determination unit 805 calculates the total stay time length at the spots Sa and Sb. The total stay time length at the spots Sa and Sb is "240 minutes". In this case, the determination unit 805 sets an incentive resource "400 (for 4 hours)" according to the total stay time length "240 minutes".

For the user U3, the determination unit 805 calculates the sum of the incentive values at the respective spots Sa and Sb. The sum of the incentive values at the respective spots Sa and Sb is "350 (= 170 + 180)". The determination unit 805 determines that the incentive to be given to the user U3 is an incentive "350" according to "350" that is the sum of the incentive values within the set resource "400".

Although the incentive to be given to each of the users U1 to U3 is determined to be a value equal to the sum of the incentive values, the determination is not limited to this. For example, a proportion at which the incentive is determined according to the sum of the incentive values may be arbitrarily set within a range in which the incentive does not exceed the incentive resource.

(Example of Notification of Campaign Information and Congestion Information)

Next, an example of a notification of the campaign information and the congestion information will be described with reference to FIG. 11. In this example, it is assumed that the target area TA is a tourism area called a "∞ island", and the spots S1 to Sn are "tourism spots A to F".

FIG. 11 is a diagram illustrating an example of a notification of the campaign information and the congestion information. In FIG. 11, a congestion state screen 1100 is an example of a screen displayed on the user terminal 202 used by a user who visits the target area TA. The congestion state screen 1100 includes campaign information 1101 and congestion information 1102.

The campaign information 1101 is information for notifying a visitor that an incentive giving campaign is being executed in the target area TA. The campaign information includes a message indicating that the longer a stay at a vacant spot, the higher an incentive award rate.

The congestion information 1102 is information enabling the congestion degree at each of the tourism spots A to F at a time point $\times\times:\infty$ to be identified. The congestion information 1102 includes the spot name and the congestion degree of each of the tourism spots A to F. For example, the information in the congestion information 1102 is updated at any time while the user is staying in the target area TA.

The congestion state screen 1100 makes it possible for the user to recognize that the campaign for cheering up the ∞ island is being executed and that the longer a stay at a vacant tourism spot, the higher an award rate of an incentive to be given for visiting the ∞ island. It is also possible for the user to recognize that the longer a stay at a crowded tourism spot, the lower the award rate of the incentive to be given for visiting the ∞ island.

The congestion state screen 1100 makes it possible for the user to recognize the congestion degree at each of the tourism spots A to F at the current time point (××:∞). For example, the user may go to the vacant tourism spots C, D, and E or avoid the crowded tourism spots Band F.

The incentive determination apparatus 201 may display the congestion information 1102, for example, in a map format instead of a list format as illustrated in FIG. 11. For example, the incentive determination apparatus 201 may display the position of the user and the positions of the respective spots Si on a map of the target area TA on the congestion state screen 1100, and may express the congestion degree at each spot Si with a color, an icon, or the like.

(Example of Notification of Incentive)

Next, an example of a notification of an incentive will be described with reference to FIG. 12. In this example, it is assumed that the target area TA is a tourism area called a "∞ island", and the spots S1 to Sn are "tourism spots A to F".

FIG. 12 is a diagram illustrating an example of a notification of an incentive. In FIG. 12, an incentive notification screen 1200 is an example of a screen displayed on the user terminal 202 used by a user who visits the target area TA. For example, the incentive notification screen 1200 is displayed when a user finishes sightseeing in the ∞ island (target area TA) and leaves the ∞ island.

The incentive notification screen 1200 displays an incentive (××× points) given to the user for visiting the target area TA. The incentive notification screen 1200 displays the tourism spots A, D, and E visited by the user, and a congestion rate (equivalent to the congestion degree) and the stay time at each of the tourism spots A, D, and E at the visit of the user.

The incentive notification screen 1200 makes it possible for the user to know that the incentive of "××× points" is given for the contributions to the congestion relief and the activation of the empty spots in the ∞ island. The user is enabled to check the congestion degree and the stay time at the visit to each of the tourism spots A, D, and E. For example, the user may understand that the visits to the vacant tourism spots D and E results in the acquisition of "××× points".

(Information Processing Procedure of User Terminal 202)

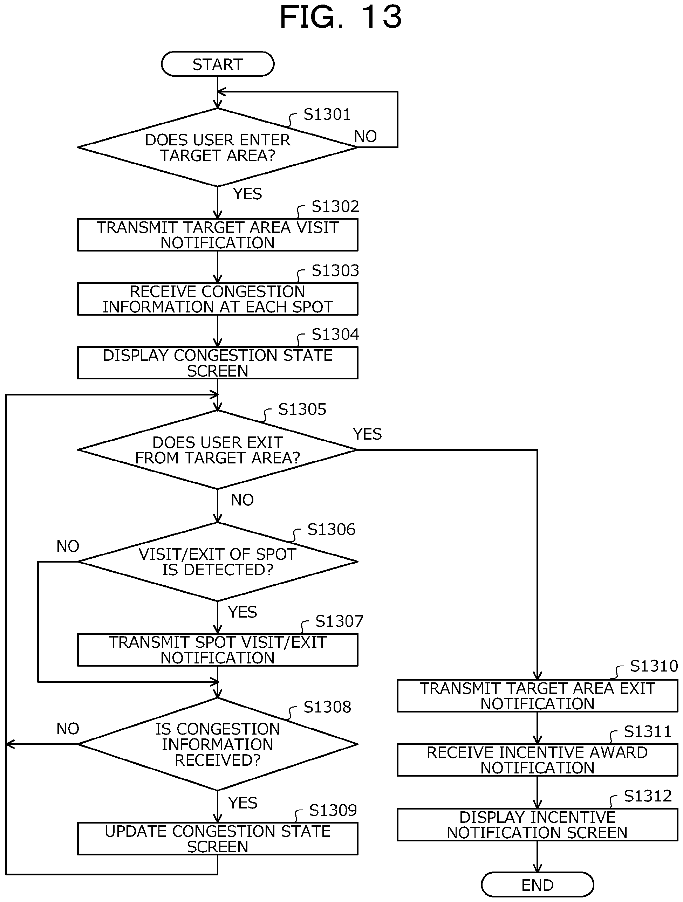

Next, an information processing procedure of the user terminal 202 will be described with reference to FIG. 13.

FIG. 13 is a flowchart illustrating an example of the information processing procedure of the user terminal 202. In the flowchart in FIG. 13, first, the user terminal 202 determines whether or not the user enters the target area TA (step S1301). Here, the user terminal 202 waits for the user to enter the target area TA (step S1301: No).

When the user enters the target area TA (step S1301: Yes), the user terminal 202 transmits a target area visit notification to the incentive determination apparatus 201 (step S1302). Then, from the incentive determination apparatus 201, the user terminal 202 receives congestion information enabling the congestion degree at each of the spots Si in the target area TA to be identified (step S1303). In this step, the user terminal 202 may receive the campaign information from the incentive determination apparatus 201.

The user terminal 202 displays a congestion state screen on the display 405 based on the received congestion information (step S1304). The congestion state screen includes congestion information and campaign information. For example, the congestion state screen is the congestion state screen 1100 as illustrated in FIG. 11.

After that, the user terminal 202 determines whether or not the user exits from the target area TA (step S1305). If the user does not exit from the target area TA (step S1305: No), the user terminal 202 determines whether or not a visit/exit of a spot Si is detected (step S1306). The visit/exit means a visit or an exit.

If a visit/exit of a spot Si is not detected (step S1306: No), the user terminal 202 proceeds to step S1308. On the other hand, if a visit/exit of a spot Si is detected (step S1306: Yes), the user terminal 202 transmits a spot visit/exit notification to the incentive determination apparatus 201 (step S1307).

Next, the user terminal 202 determines whether the congestion information enabling the congestion degree at each spot Si to be identified is received (step S1308). If the congestion information is not received (step S1308: No), the user terminal 202 returns to step S1305. On the other hand, if the congestion information is received (step S1308: Yes), the user terminal 202 updates the congestion state screen based on the received congestion information (step S1309), and returns to step S1305.

If the user exits from target area TA in step S1305 (step S1305: Yes), the user terminal 202 transmits a target area exit notification to the incentive determination apparatus 201 (step S1310). Next, the user terminal 202 receives an incentive award notification from the incentive determination apparatus 201 (step S1311).

The user terminal 202 displays an incentive notification screen based on the received incentive award notification on the display 405 (step S1312), and ends the series of processing according to the present flowchart. The incentive notification screen includes an incentive given to the user for visiting the target area TA. The incentive notification screen is, for example, the incentive notification screen 1200 as illustrated in FIG. 12.

In this way, the user terminal 202 is able to notify the incentive determination apparatus 201 of the visit/exit of each spot Si included in the target area TA. The user terminal 202 is able to display the congestion degree at each spot Si during the stay in the target area TA. The user terminal 202 is able to display the incentive given to the user at a timing when the visit to the target area TA is finished.

(Congestion State Update Processing Procedure of Incentive Determination Apparatus 201)

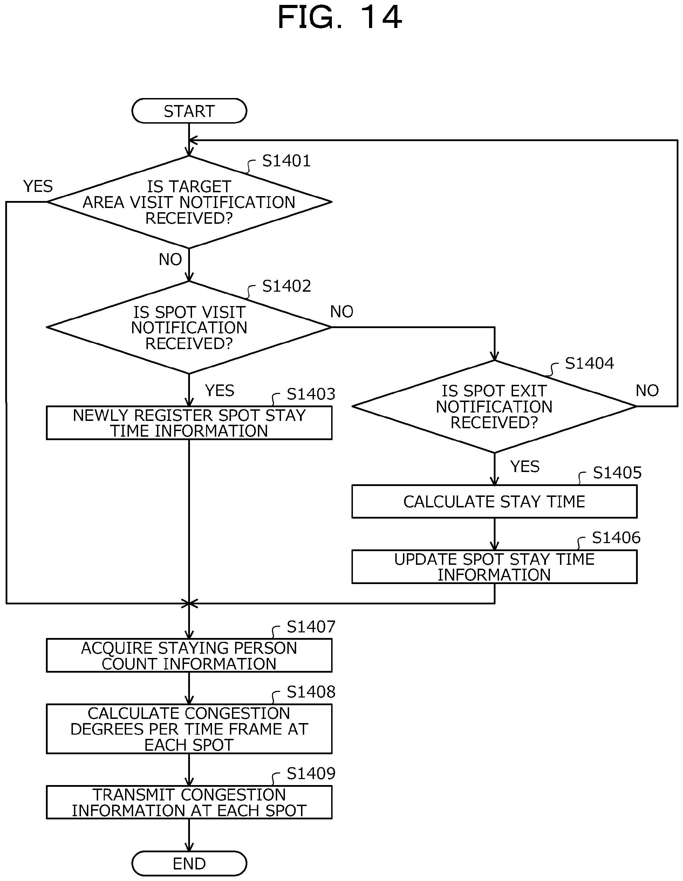

Next, a congestion state update processing procedure of the incentive determination apparatus 201 will be described with reference to FIG. 14.

FIG. 14 is a flowchart illustrating an example of the congestion state update processing procedure of the incentive determination apparatus 201. In the flowchart in FIG. 14, first, the incentive determination apparatus 201 determines whether or not a target area visit notification is received from the user terminal 202 (step S1401).

If the target area visit notification is received (step S1401: Yes), the incentive determination apparatus 201 proceeds to step S1407. On the other hand, if the target area visit notification is not received (step S1401: No), the incentive determination apparatus 201 determines whether or not a spot visit notification is received from the user terminal 202 (step S1402).

If the spot visit notification is received (step S1402: Yes), the incentive determination apparatus 201 newly registers the spot stay time information in the spot stay time DB 240 (step S1403), and proceeds to step S1407.

On the other hand, if the spot visit notification is not received (step S1402: No), the incentive determination apparatus 201 determines whether or not a spot exit notification is received from the user terminal 202 (step S1404). If the spot exit notification is not received (step S1404: No), the incentive determination apparatus 201 returns to step S1401.

On the other hand, if the spot exit notification is received (step S1404: Yes), the incentive determination apparatus 201 refers to the corresponding spot stay time information in the spot stay time DB 240 to calculate the stay time at the visit spot (step S1405). The corresponding spot stay time information in the spot stay time DB 240 is the spot stay time information associated with the user ID and the spot ID/name included in the spot exit notification.

Next, the incentive determination apparatus 201 updates the corresponding spot stay time information in the spot stay time DB 240 based on the calculated stay time (step S1406). The incentive determination apparatus 201 acquires the staying person count information from the spot terminal 203 installed in each spot Si (step S1407).

Then, the incentive determination apparatus 201 calculates the congestion degrees per time frame at each spot Si based on the acquired staying person count information (step S1408). The incentive determination apparatus 201 transmits the congestion information enabling the calculated congestion degree at each spot Si to be identified to the user terminal 202 of each user staying in the target area TA (step S1409), and ends the series of processing according to the present flowchart.

In this way, in response to reception of each of the various notifications (the target area visit notification, the spot visit notification, and the spot exit notification), the incentive determination apparatus 201 is able to update the congestion information enabling the calculated congestion degree at each spot Si to be identified, and notify each user staying in the target area TA of the congestion information. The incentive determination apparatus 201 is able to identify the stay time of each user at each visit spot.

(Incentive Determination Processing Procedure of Incentive Determination Apparatus 201)

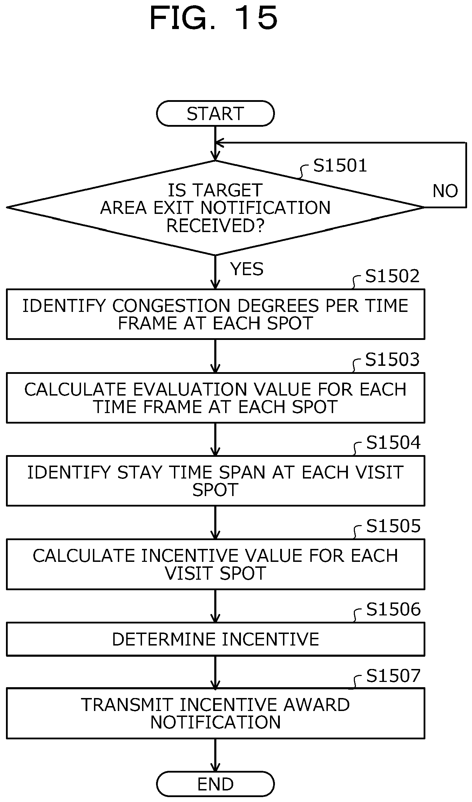

Next, an incentive determination processing procedure of the incentive determination apparatus 201 will be described with reference to FIG. 15.

FIG. 15 is a flowchart illustrating an example of the incentive determination processing procedure of the incentive determination apparatus 201. In the flowchart in FIG. 15, first, the incentive determination apparatus 201 determines whether or not a target area exit notification is received from the user terminal 202 (step S1501).

If the target area exit notification is not received (step S1501: No), the incentive determination apparatus 201 waits for reception of the target area exit notification. If the target area exit notification is received (step S1501: Yes), the incentive determination apparatus 201 refers to the congestion state DB 230 and identifies the congestion degrees per time frame at each spot Si (step S1502).

Based on the identified congestion degrees per time frame at each spot Si, the incentive determination apparatus 201 calculates each of evaluation values per time frame at each spot Si such that the lower the congestion degree, the higher the evaluation value (step S1503).

Next, the incentive determination apparatus 201 refers to the spot stay time DB 240 and identifies the stay time span at each visit spot visited by a user (step S1504). For example, the user is identified from the user ID included in the target area exit notification. For example, the processing in step S1504 may be executed before the processing in step S1502.

Based on the calculated evaluation values per time frame at each spot Si, the incentive determination apparatus 201 calculates an incentive value for each visit spot according to the evaluation value(s) for the identified stay time span at the visit spot (step S1505). Next, the incentive determination apparatus 201 determines an incentive to be given to the user based on the sum of the calculated incentive values for the respective visit spots (step S1506).

The incentive determination apparatus 201 transmits an incentive award notification to the user terminal 202 that is the sender of the target area exit notification (step S1507), and ends the series of processing according to this flowchart. The incentive award notification includes information enabling the determined incentive to be identified.

In this way, at the timing when the visit to the target area TA is finished, the incentive determination apparatus 201 is able to determine an incentive for visiting the target area TA and notify the user of the determined incentive.

As described above, the incentive determination apparatus 201 according to the embodiment is able to identify the stay time span at each visit spot visited by a user among the spots S1 to Sn included in the target area TA. The incentive determination apparatus 201 is also able to calculate each of the evaluation values per time frame at each spot Si, which are for use to determine the incentive for visiting the target area TA, based on the congestion degrees per time frame at each spot Si such that the lower the congestion degree, the higher the evaluation value. The incentive determination apparatus 201 is able to calculate an incentive value for visiting each visit spot according to the evaluation value(s) for the identified stay time span at the visit spot based on the calculated evaluation values per time frame at each spot Si, and determine an incentive to be given to a user based on the sum of the calculated incentive values.

As a result, the incentive determination apparatus 201 is able to reduce crowded spots and activate empty spots in the target area TA including the spots S1 to Sn. For example, the incentive determination apparatus 201 is able to give a user a motivation to exit from a crowded spot or to go to a vacant spot by giving the incentive according to the degree of contribution to congestion relief or activation of the empty spots in the entire target area TA.

In calculation of each of the evaluation values per time frame at each spot Si, the incentive determination apparatus 201 is able to calculate, as the evaluation value, a negative value that becomes lower as the congestion degree becomes higher if the congestion degree is higher than the threshold a. The incentive determination apparatus 201 is also able to calculate, as the evaluation value, a positive value that becomes higher as the congestion degree becomes lower if the congestion degree is equal to or lower than the threshold o. For example, the congestion degree for each time frame at each spot Si is expressed by, for example, the proportion of the staying person count for the time frame at the spot Si to the capacity of the spot Si.

Accordingly, for example, if a user visits a spot (crowded spot) for a time frame in which persons more than the capacity stay, the incentive determination apparatus 201 is able to adjust the incentive by setting the evaluation value for the time frame to a negative value proportional to an excess of the staying person count for the time frame over the capacity. On the other hand, if a user visits a spot (an empty spot) for a time frame in which persons less than the capacity stay, the incentive determination apparatus 201 is able to adjust the incentive by setting the evaluation value for the time frame to a positive value proportional to a shortage of the staying person count for the time frame with respect to the capacity.

In calculation of an incentive value for visiting each visit spot, the incentive determination apparatus 201 is able to calculate the incentive value by summing up the evaluation values for time frames included in the stay time span based on the evaluation values per time frame at each spot Si.

Accordingly, the incentive determination apparatus 201 is able to adjust the incentive such that a longer stay at a crowded spot does not result in a higher incentive. The incentive determination apparatus 201 is able to adjust the incentive such that the longer a stay at an empty spot, the higher the incentive.

The incentive determination apparatus 201 is able to notify a user staying in the target area TA of the congestion information enabling the congestion degree at each spot Si to be identified.

Consequently, the incentive determination apparatus 201 is able to provide a user staying in the target area TA with the information enabling the congestion state at each spot Si to be recognized.

After a notification of the congestion information and before a user visits a first spot at which the congestion degree identified from the congestion information is lower than the first threshold, the congestion degree of the first spot is changed to be equal to or higher than the second threshold in some cases. In this case, the incentive determination apparatus 201 is able to calculate an incentive value for visiting the first spot by adjusting the incentive value to a value higher than an incentive value for visiting a spot at which the congestion degree identified from the congestion information is equal to or higher than the second threshold.

Accordingly, in a case where a vacant spot becomes crowded while a user is moving to the vacant spot with reference to the provided congestion information, the incentive determination apparatus 201 is able to reduce a decrease in the incentive value for visiting the spot.

In a case where the congestion degree at a visit spot becomes lower than the first threshold while a user is staying at the visit spot, the incentive determination apparatus 201 is able to notify the user of information that the incentive will increase if the user continues to stay at the visit spot.

Accordingly, in a case where a visit spot becomes vacant while a user is staying at the visit spot, the incentive determination apparatus 201 is able to encourage the user to stay at the visit spot for a long period of time and thereby activate the empty spot.

In a case where the congestion degree at a visit spot becomes equal to or higher than the second threshold while a user is staying at the visit spot, the incentive determination apparatus 201 is able to notify the user of information indicating that the incentive will decrease if the user continues to stay at the visit spot.

Accordingly, in a case where a visit spot becomes crowded while a user is staying at the visit spot, the incentive determination apparatus 201 is able to encourage the user to exit from the visit spot and relieve the congestion.

When a user visits the target area TA, the incentive determination apparatus 201 is also able to notify the user of information that the longer a stay at a vacant spot among the spots S1 to Sn, the higher the incentive for visiting the target area TA.

Accordingly, the incentive determination apparatus 201 is able to notify the user that an incentive will be given according to the degree of contribution to congestion relief and activation of an empty spot in the entire target area TA.

As described above, the incentive determination apparatus 201 is able to give a user visiting a tourism area or the like a motivation to go to a vacant spot or to stay long at the vacant spot and a motivation not to go to a crowded spot or not to stay long at the crowded spot. Thus, for example, the incentive determination apparatus 201 is able to relieve local congestion in a tourism area to avoid hindrance in the lives of neighboring residents, and activate vacant spots by attracting tourists thereto.

The incentive determination method described in the present embodiment may be implemented by a computer such as a personal computer or a workstation executing a previously prepared program. The incentive determination program is stored in a computer-readable recording medium such as a hard disk, a flexible disk, a CD-ROM disk, a DVD disk, a USB memory disk, or the like, and is read out from the recording medium and executed by a computer. Instead, the incentive determination program may be distributed via a network such as the Internet.

**Claims**

1. An incentive determination method, comprising:

   identifying, by a computer, a stay time span at each visit spot visited by a user among a plurality of spots included in a target area;
   calculating an evaluation value per time frame at each of the plurality of spots based on a congestion degree per time frame at the spot such that the evaluation value becomes higher as the congestion degree becomes lower, the evaluation value being used to determine an incentive for visiting the target area;
   calculating an incentive value for visiting each visit spot according to an evaluation value for the identified stay time span at each visit spot based on the calculated evaluation value per time frame at each spot; and
   determining an incentive to be given to the user based on a sum of calculated incentive values.

2. The incentive determination method according to claim 1, wherein

   the congestion degree per time frame at each spot is expressed by a proportion of a staying person count for the time frame at the spot to a capacity of the spot, and
   the method further comprises:

   if the congestion degree is higher than a threshold, calculating the evaluation value having a negative value that becomes lower as the congestion degree becomes higher; and
   if the congestion degree is equal to or lower than the threshold, calculating the evaluation value having a positive value that becomes higher as the congestion degree becomes lower.

3. The incentive determination method according to claim 2, further comprising:
   calculating the incentive value by summing up the evaluation value for each time frame included in the stay time span based on the evaluation value per time frame at each spot.

4. The incentive determination method according to any one of claims 1 to 3, further comprising:
   notifying the user staying in the target area of congestion information enabling the congestion degree at each spot to be identified.

5. The incentive determination method according to claim 4, further comprising:
   in a case where, after the congestion information is notified of and before the user visits a first spot at which the

EP 4 390 823 A1

congestion degree identified from the congestion information is lower than a first threshold, the congestion degree at the first spot is changed to be equal to or higher than a second threshold, calculating the incentive value for visiting the first spot as a value higher than an incentive value for visiting a spot at which the congestion degree identified from the congestion information is equal to or higher than the second threshold.

6. The incentive determination method according to any one of claims 1 to 5, further comprising:
in a case where the congestion degree at a current visit spot where the user is staying becomes lower than a first threshold, notifying the user of information that the incentive will increase if the user continues to stay at the current visit spot.

7. The incentive determination method according to any one of claims 1 to 6, further comprising:
in a case where the congestion degree at a current visit spot where the user is staying becomes equal to or higher than a second threshold, notifying the user of information that the incentive will decrease if the user continues to stay at the current visit spot.

8. The incentive determination method according to any one of claims 1 to 7, further comprising:
when the user visits the target area, notifying the user of information that an incentive for visiting the target area becomes higher as a stay at a vacant spot among the plurality of spots becomes longer.

9. A program that cause a computer to execute the incentive determination method according to claim 1.

18

# FIG. 1

# FIG. 2

200

201

SPOT STAY TIME DB ~ 240

CONGESTION STATE DB ~ 230

CAPACITY INFORMATION TABLE ~ 220

210

202    202    ...    202

203    203    ...    203

# FIG. 3

201

304
DISK

301
CPU

302
MEMORY

303
DISK DRIVE

300

305
COMMUNICATION I/F

306
PORTABLE-TYPE RECORDING MEDIUM I/F

210
NETWORK

307
PORTABLE-TYPE RECORDING MEDIUM

# FIG. 4

202

| 401 | 402 | 403 |
|-----|-----|-----|
| CPU | MEMORY | GPS UNIT |

400

| 404 | 405 | 406 | 407 |
|-----|-----|-----|-----|
| COMMUNICATION I/F | DISPLAY | INPUT DEVICE | PORTABLE-TYPE RECORDING MEDIUM I/F |

210

NETWORK

408

PORTABLE-TYPE RECORDING MEDIUM

# FIG. 5

CAPACITY INFORMATION TABLE — 220

| | SPOT ID | CAPACITY (PERSON) |
|---|---|---|
| 500-1 | S1 | 3000 |
| 500-2 | S2 | 1000 |
| 500-3 | S3 | 2000 |
| 500-4 | S4 | 4000 |
| | . . . | |
| | . . . | |

FIG. 6

CONGESTION STATE DB ~ 230

| DATE | SPOT ID | CONGESTION STATE PER TIME FRAME (PERSON) | | | | | | | | | | | |
|---|---|---|---|---|---|---|---|---|---|---|---|---|---|
| | | 6-7 | 7-8 | 8-9 | 9-10 | 10-11 | 11-12 | 12-13 | 13-14 | 14-15 | 15-16 | 16-17 | 17-18 |
| 10/21 /2022 | S1 | 0 | 0 | 30 | 1500 | 3300 | 2700 | 2700 | 600 | 600 | 300 | 300 | 600 |
| | S2 | 0 | 0 | 0 | 100 | 200 | 300 | 200 | 200 | 300 | 300 | 200 | 100 |
| | S3 | 0 | 0 | 0 | 200 | 400 | 400 | 300 | 2200 | 2400 | 2000 | 2000 | 600 |
| | S4 | 0 | 0 | 100 | 2000 | 4000 | 5000 | 2000 | 2000 | 3000 | 6000 | 3000 | 500 |
| | . . . | | | | | | | | | | | | |
| 10/22 /2022 | . . . | | | | | | | | | | | | |

600-1

# FIG. 7

SPOT STAY TIME DB — 240

| | USER ID | POSITION INFORMATION (LATITUDE, LONGITUDE) | DATE AND TIME INFORMATION | SPOT ID/NAME | STAY TIME |
|---|---|---|---|---|---|
| 700-1 | U1 | 50.631392154418, -1.1707654378238146 | 10/3/2022 8:00 | S4, S BEACH | 3 HOURS |
| 700-2 | U1 | 50.6549998844616, -1.2208818774636023 | 10/3/2022 11:00 | S2, A ZOO | 2 HOURS |
| 700-3 | U1 | 50.678983320681056, -1.2141548927024233 | 10/3/2022 13:00 | S3, G SHOPPING CENTER | 2 HOURS |
| 700-4 | U1 | 50.67874263230678, -1.244968348320483 | 10/3/2022 15:00 | S1, M MUSEUM | 3 HOURS |
| | . . . | . . . | . . . | . . . | . . . |
| | . . . | . . . | . . . | . . . | . . . |

FIG. 8

INCENTIVE DETERMINATION APPARATUS                                                      201

CONTROL UNIT                                                                                  800

| RECEPTION UNIT | IDENTIFICATION UNIT | FIRST CALCULATION UNIT | SECOND CALCULATION UNIT | DETERMINATION UNIT |
|---|---|---|---|---|
| 801 | 802 | 803 | 804 | 805 |

NOTIFICATION UNIT                                                                             806

# FIG. 9

CONGESTION DEGREE
AT SPOT Sa

900

901 U1
902 U2
903 U3

FIG. 10

# FIG. 11

1100

BONUS INFORMATION! CAMPAIGN FOR CHEERING UP ○○ ISLAND IS UNDER EXECUTION

VACANT SPOTS ARE TARGETED!

DISCOUNT AND SO ON WILL INCREASE IF YOU STAY LONGER AT VACANT SPOT!

(CAUTION: AWARD RATE WILL DECREASE IF YOU STAY LONG AT CROWDED SPOT)

CONGESTION INFORMATION
(AT TIME POINT ××:○○, CONGESTION RATE IN PARENTHESES)

- TOURISM SPOT A SLIGHTLY CROWDED (80%)
- TOURISM SPOT B CROWDED (100%)
- TOURISM SPOT C VACANT (30%)
- TOURISM SPOT D VACANT (10%)
- TOURISM SPOT E VACANT (40%)
- TOURISM SPOT F CROWDED (100%)

1101

1102

# FIG. 12

1200

NOTIFICATION OF ACQUISITION OF POINTS!

THANK YOU FOR VISITING ○○ ISLAND !
ACQUIRED POINTS IN THIS VISIT ARE xxx POINTS!

DETAILS IN THIS VISIT (CONGESTION RATE AND STAY TIME)
· TOURISM SPOT A 80% FOR 1 HOUR, 90% FOR 1 HOUR
· TOURISM SPOT D 10% FOR 3 HOURS, 20% FOR 2 HOURS
· TOURISM SPOT E 40% FOR 2 HOURS, 30% FOR 2 HOURS

THANK YOU FOR CHEERING UP ○○ ISLAND!

# FIG. 13

START

S1301
DOES USER ENTER TARGET AREA? —— NO

YES

S1302
TRANSMIT TARGET AREA VISIT NOTIFICATION

S1303
RECEIVE CONGESTION INFORMATION AT EACH SPOT

S1304
DISPLAY CONGESTION STATE SCREEN

S1305
DOES USER EXIT FROM TARGET AREA? —— YES

NO

S1306
VISIT/EXIT OF SPOT IS DETECTED? —— NO

YES

S1307
TRANSMIT SPOT VISIT/EXIT NOTIFICATION

S1308
IS CONGESTION INFORMATION RECEIVED? —— NO

YES

S1309
UPDATE CONGESTION STATE SCREEN

S1310
TRANSMIT TARGET AREA EXIT NOTIFICATION

S1311
RECEIVE INCENTIVE AWARD NOTIFICATION

S1312
DISPLAY INCENTIVE NOTIFICATION SCREEN

END

# FIG. 14

START

S1401
IS TARGET AREA VISIT NOTIFICATION RECEIVED?

YES

NO

S1402
IS SPOT VISIT NOTIFICATION RECEIVED?

NO

YES

S1403
NEWLY REGISTER SPOT STAY TIME INFORMATION

S1404
IS SPOT EXIT NOTIFICATION RECEIVED?

NO

YES

S1405
CALCULATE STAY TIME

S1406
UPDATE SPOT STAY TIME INFORMATION

S1407
ACQUIRE STAYING PERSON COUNT INFORMATION

S1408
CALCULATE CONGESTION DEGREES PER TIME FRAME AT EACH SPOT

S1409
TRANSMIT CONGESTION INFORMATION AT EACH SPOT

END

# FIG. 15

```
                    ┌──────────────┐
                    │    START     │
                    └──────┬───────┘
                           │      ┌──────────────────────┐
                           ▼     ╱  S1501                 │
                        ╱──────────────╲                  │
                       ╱   IS TARGET     ╲    NO           │
                      ╱ AREA EXIT NOTIFI- ╲────────────────┘
                       ╲   CATION         ╱
                        ╲  RECEIVED?     ╱
                         ╲──────────────╱
                           │ YES
                           ▼        ╱ S1502
        ┌───────────────────────────────────────┐
        │ IDENTIFY CONGESTION DEGREES PER TIME   │
        │        FRAME AT EACH SPOT              │
        └────────────────────┬──────────────────┘
                             ▼        ╱ S1503
        ┌───────────────────────────────────────┐
        │ CALCULATE EVALUATION VALUE FOR EACH    │
        │        TIME FRAME AT EACH SPOT         │
        └────────────────────┬──────────────────┘
                             ▼        ╱ S1504
        ┌───────────────────────────────────────┐
        │ IDENTIFY STAY TIME SPAN AT EACH VISIT  │
        │                SPOT                    │
        └────────────────────┬──────────────────┘
                             ▼        ╱ S1505
        ┌───────────────────────────────────────┐
        │ CALCULATE INCENTIVE VALUE FOR EACH     │
        │             VISIT SPOT                 │
        └────────────────────┬──────────────────┘
                             ▼        ╱ S1506
        ┌───────────────────────────────────────┐
        │         DETERMINE INCENTIVE            │
        └────────────────────┬──────────────────┘
                             ▼        ╱ S1507
        ┌───────────────────────────────────────┐
        │      TRANSMIT INCENTIVE AWARD          │
        │           NOTIFICATION                 │
        └────────────────────┬──────────────────┘
                             ▼
                    ┌──────────────┐
                    │     END      │
                    └──────────────┘
```

Europäisches
Patentamt

European
Patent Office

Office européen
des brevets

# EUROPEAN SEARCH REPORT

Application Number

EP 23 19 8223

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/240151 A1 (D'ANDREA MICHAEL GLYNN [US] ET AL) 23 August 2018 (2018-08-23) <br> * paragraph [0002] * <br> * paragraph [0026] – paragraph [0028] * <br> * paragraph [0036] * <br> * paragraph [0044] – paragraph [0046] * <br> * paragraph [0051] – paragraph [0055] * <br> * paragraph [0120] – paragraph [0130] * <br> ----- | 1-9 | INV. <br> G06Q30/0235 <br> G06Q30/0251 <br> H04W4/021 |
| X | JP 2022 168523 A (ZENRIN CO LTD) 8 November 2022 (2022-11-08) <br> * paragraph [0008] – paragraph [0011] * <br> * paragraph [0027] – paragraph [0028] * <br> * paragraph [0043] – paragraph [0051] * <br> ----- | 1-9 | |
| A,D | JP 2018 022377 A (HITACHI LTD) 8 February 2018 (2018-02-08) <br> * paragraph [0006] – paragraph [0009] * <br> ----- | 1-9 | |

TECHNICAL FIELDS
SEARCHED       (IPC)

G06Q
H04W

The present search report has been drawn up for all claims

| Place of search | Date of completion of the search | Examiner |
|---|---|---|
| The Hague | 23 February 2024 | Moynihan, Maurice |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 19 8223

This annex lists the patent family members relating to the patent documents cited in the above-mentioned European search report.
The members are as contained in the European Patent Office EDP file on
The European Patent Office is in no way liable for these particulars which are merely given for the purpose of information.

23-02-2024

| Patent document cited in search report | | Publication date | Patent family member(s) | | Publication date |
|---|---|---|---|---|---|
| US 2018240151 | A1 | 23-08-2018 | NONE | | |
| JP 2022168523 | A | 08-11-2022 | NONE | | |
| JP 2018022377 | A | 08-02-2018 | JP | 6646545 B2 | 14-02-2020 |
| | | | JP | 2018022377 A | 08-02-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018022377 A